# EUROPÄISCHE PATENTSCHRIFT

(11) **EP 2 524 458 B1**
(45) Veröffentlichungstag und Bekanntmachung des Hinweises auf die Patenterteilung: **17.08.2016**
(21) Anmeldenummer: 11700128.9
(22) Anmeldetag: 10.01.2011
(51) Int. Cl.: H04J 14/02, H04B 10/61, H04B 10/29

(54) **NETZELEMENT**
NETWORK ELEMENT
ÉLÉMENT DE RÉSEAU

(30) Priorität: 11.01.2010 DE 102010004285
(43) Veröffentlichungstag der Anmeldung: 21.11.2012
(73) Patentinhaber: Fraunhofer-Gesellschaft zur Förderung der angewandten Forschung, 80686 München (DE)
(72) Erfinder: SCHELL, Martin, 10437 Berlin (DE); VORREAU, Philipp, 10785 Berlin (DE)
(74) Vertreter: Friese Goeden Patentanwälte
(86) Internationale Anmeldenummer: PCT/EP2011/050217
(87) Internationale Veröffentlichungsnummer: WO 2011/083165

(56) Entgegenhaltungen:
- EP-A1- 1 496 636

## Beschreibung

Die Erfindung betrifft ein Netzelement mit zumindest einem ersten Eingang, welchem ein optisches Signal zuführbar ist, und zumindest einem ersten Ausgang, welcher dazu eingerichtet ist, ein optisches Signal auszusenden.

Aus der EP 1 496 636 A1 ist ein Abzweigmultiplexer bekannt, welcher einen Laser enthält. Der Laser ist dazu vorgesehen, ein Trägersignal für ein dem Ausgangssignal hinzuzufügendes Signal und ein Referenzsignal für einen Empfangsteil des Abzweigmultiplexers zu erzeugen.

Aus der US 2009/0175620 A1 ist ein Netzelement der eingangs genannten Art bekannt. Das offenbarte Netzelement weist einen ersten Eingang auf, welchem ein optisches Signal zuführbar ist. Das optische Signal enthält eine Mehrzahl unterschiedlicher Kanäle mit jeweils einer zugeordneten Frequenz bzw. Wellenlänge. Weiterhin enthält das vorbekannte Netzelement einen optischen Schalter, welcher mittels optischer Filter einzelne Kanäle des optischen Eingangssignals auf vorgebbare Ausgänge aufschaltet. Daneben kann ein weiterer Eingang vorhanden sein, mit welchem ein zusätzliches Signal zu einem Ausgangssignal hinzugefügt werden kann. Das Netzelement kann somit dazu verwendet werden, vorgebbare Kanäle des optischen Eingangssignals unverändert in das Ausgangssignal zu überführen und einzelne Kanäle des optischen Signales extrahieren und an einem weiteren elektrischen oder optischen Ausgang bereit zu stellen. Schließlich kann das Netzelement über einen weiteren Eingang ein Eingangssignal entgegennehmen, welches ebenfalls dem Ausgangssignal zugeführt wird.

Diese bekannte Lösung weist jedoch den Nachteil auf, dass durch die Verwendung des optischen Schalters hohe Einfügeverluste entstehen. In einigen Ausführungsformen können die im optischen Schalter verwendeten Filter eine Phasenwelligkeit hervorrufen, welche die Signalqualität nachteilig beeinflusst und die Kaskadierbarkeit einer Mehrzahl der genannten Netzelemente einschränkt. Sofern die Kapazität eines mit dem bekannten Netzelement ausgestatteten optischen Netzwerkes durch eine größere Anzahl optischer Kanäle mit jeweils eigener, zugeordneter Wellenlänge vergrößert werden soll, müssen zumindest einige der optischen Schalter ausgetauscht werden. Dadurch erfordert die Vergrößerung der Kapazität des optischen Netzes einen erheblichen Aufwand, welcher längere Stillstandszeiten des optischen Netzwerkes bedingt. Weiterhin können die bekannten Netzelemente nicht im Betrieb skaliert werden, d.h. eine Erhöhung bzw. Erniedrigung der Kanalzahl nach der Installation ist nicht möglich.

Ausgehend von diesem Stand der Technik besteht die Aufgabe der vorliegenden Erfindung darin, ein Netzelement bereitzustellen, welches geringere Einfügeverluste aufweist, die Signalqualität in geringerem Maße beeinflusst und eine einfache Skalierbarkeit des mit dem Netzelement ausgestatteten optischen Netzwerkes gestattet.

Die Aufgabe wird erfindungsgemäß durch ein Netzelement mit den Merkmalen des Anspruch 1 und ein Verfahren nach Anspruch 16 gelöst.

Das offenbarte Netzelement weist einen ersten Eingang auf, welchem ein optisches Eingangssignal zuführbar ist. Das optische Signal enthält eine Mehrzahl unterschiedlicher Kanäle mit jeweils einer zugeordneten Frequenz bzw. Wellenlänge. Das Eingangssignal wird in ein Ausgangssignal überführt, wobei die Nutzdaten von zumindest einem Kanal zumindest teilweise manipuliert werden.

Das vorgeschlagene Netzelement kann in einigen Ausführungsformen der Erfindung einen rekonfigurierbaren, optischen Add-Drop-Multiplexer enthalten, welcher einen Datenstrom aus dem Eingangssignal entfernt und/oder hinzufügt und/oder ändert. In anderen Ausführungsformen der Erfindung kann das Netzelement ein optisches Signal regenerieren, um die abnehmende Signalqualität aufgrund der Dispersion der das Signal tragenden Faser zu kompensieren. Die Regeneration kann dabei eine Verstärkung und/oder eine Pulsformung und/oder eine Korrektur des Timings umfassen.

Erfindungsgemäß wird vorgeschlagen, anstelle des optischen Schalters einen optischen Koppler einzusetzen, welcher einen vorgebbaren Anteil des Eingangssignals auskoppelt. Dieser Anteil wird mittels eines optischen Empfängers in ein elektrisches Signal gewandelt. Das elektrische Signal kann nachfolgend mittels einer Signalverarbeitungseinrichtung verarbeitet werden. Das Ausgangssignal der Signalverarbeitungseinrichtung kann mittels eines optischen Senders in ein optisches Signal gewandelt werden. Im Anschluss daran kann das modifizierte optische Signal mittels eines zweiten Kopplers wieder dem Ausgangssignal zugeführt werden.

Anders als bei dem bekannten Netzelement wird die Selektivität auf eine vorgebbare optische Wellenlänge und damit die Selektivität auf einen vorgebbaren Kanal eines mehrere Kanäle enthaltenden optischen Signals nicht durch einen optischen Filter erreicht, sondern durch die vorgebbaren Mittenfrequenz und die endliche Bandbreite eines optischen Empfängers, welcher das optische Signal in ein elektrisches Signal wandelt. Auf diese Weise kann die Mittenfrequenz und damit der auszuwählende Kanal in einfacher Weise am optischen Empfänger ausgewählt werden.

Die Verknüpfung der einzelnen Baugruppen des Netzelementes kann direkt erfolgen, d.h. ohne ein weiteres, zwischengeschaltetes Bauelement oder indirekt, d.h. über zumindest ein zwischengeschaltetes Bauelement oder über eine aus mehreren Bauelementen bestehenden Baugruppe.

In einigen Ausführungsformen der Erfindung kann der optische Empfänger dazu eingerichtet sein, nur Licht eines einzelnen, vorgebbaren Kanals bzw. Wellenlängenbereichs in ein elektrisches Signal zu wandeln. Auf diese Weise erlaubt das erfindungsgemäße Netzelement das Auskoppeln bzw. die Regeneration eines einzelnen, vorgebbaren Teildatenstroms aus einem Eingangssignal, welches eine Mehrzahl unabhängiger Datenströme in unabhängigen Kanälen transportiert.

In einigen Ausführungsformen der Erfindung kann vorgesehen sein, dass die Signalverarbeitungseinrichtung mittels eines weiteren Ausgangs einen ausgewählten Teildatenstrom als elektrischen Datenstrom zur Verfügung stellt. Der Teildatenstrom kann den Datenstrom eines Kanals enthalten oder zumindest einen Teil des Datenstromes eines Kanals. Darüber hinaus kann die Signalverarbeitungseinrichtung einen weiteren Eingang aufweisen, mittels welchem ein Datenstrom auf das optische Eingangssignal aufmoduliert werden kann. Auf diese Weise kann der Datenstrom eines Kanals des Eingangssignals abgezweigt werden, beispielsweise um diesen auf einer anderen optischen Faser zu einem anderen Bestimmungsort zu leiten. Die frei werdende Übertragungskapazität kann dann von einem weiteren Datenstrom genutzt werden, welcher von einem anderen Einspeisepunkt zu dem erfindungsgemäßen Netzelement geleitet wird.

Eine besonders zuverlässige Auswahl eines Kanals bzw. Wellenlängenbereichs aus dem optischen Eingangssignal kann mittels eines Lokaloszillators erreicht werden, welcher ein optisches Signal einer vorgebbaren Wellenlänge bereitstellt, welche in etwa der Wellenlänge des Unterträgers des jeweiligen Kanals entspricht. Hierzu kann der Lokaloszillator beispielsweise eine Leuchtdiode, einen Halbleiterlaser oder ein anderes optoelektronisches Halbleiterbauelement enthalten. Sofern der Lokaloszillator durchstimmbar ist, kann durch Veränderung der vom Lokaloszillator ausgesandten Wellenlänge das vom optischen Empfänger ausgekoppelte Signal in besonders einfacher Weise variiert werden.

Nachfolgend soll die Erfindung anhand von Ausführungsbeispielen und Figuren ohne Beschränkung des allgemeinen Erfindungsgedankens näher erläutert werden. Dabei zeigt
Figur 1 das Blockdiagramm eines erfindungsgemäß vorgeschlagenen Netzelementes.
Figur 2 zeigt das Blockdiagramm einer Ausführungsform des erfindungsgemäßen Netzelementes mit einer analogen Signalverarbeitung.
Figur 3 zeigt das Blockdiagramm einer Ausführungsform des erfindungsgemäßen Netzelementes mit einer digitalen Signalverarbeitung.

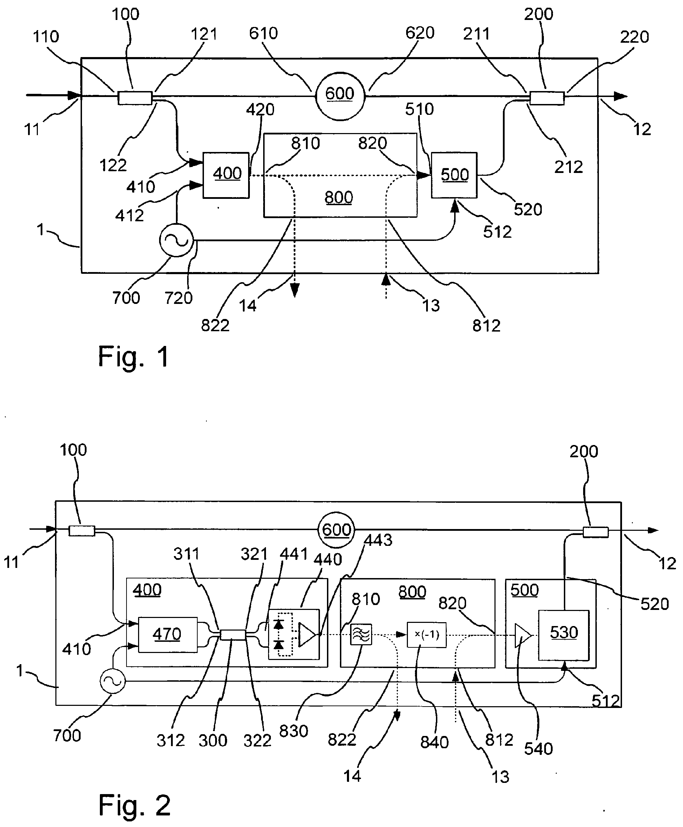

Figur 1 zeigt eine Ausführungsform des erfindungsgemäß vorgeschlagenen Netzelementes 1. Das Netzelement 1 weist einen ersten Eingang 11 auf, welchem ein optisches Eingangssignal zuführbar ist. Das über den ersten Eingang 11 empfangene Eingangssignal kann im optischen Freistrahl zugeführt werden. Meist wird das Eingangssignal jedoch mittels eines an sich bekannten Lichtwellenleiters bzw. einer optischen Faser zugeführt. Das optische Eingangssignal kann eine Mehrzahl von Nutzdatenströmen enthalten, welche in unabhängigen Kanälen unabhängig voneinander transportiert werden. Dabei kann jeder Kanal eine eindeutige Wellenlänge bzw. Trägerfrequenz aufweisen, welche sich von der Trägerfrequenz eines benachbarten Kanals unterscheidet. In einigen Ausführungsformen der Erfindung kann der Unterschied zweier benachbarter Trägerfrequenzen etwa 100 GHz betragen. In anderen Ausführungsformen der Erfindung kann der Unterschied etwa 50 GHz oder etwa 25 GHz oder 1 GHz oder weniger als 1 GHz betragen.

Hinter dem Eingang 11 des Netzelementes 1 gelangt das Eingangssignal zu einem ersten Koppler 100. Der erste Koppler 100 weist zumindest einen Eingang 110 und zumindest zwei Ausgänge 121 und 122 auf. Der Koppler 100 kann als Schmelzkoppler ausgeführt sein, bei welchem ein auskoppelnder Lichtwellenleiter am Eingangslichtwellenleiter anliegend angeordnet ist, so dass ein vorgebbarer Anteil des Signals durch Übersprechen in den auskoppelnden Lichtwellenleiter übertragen wird. In anderen Ausführungsformen der Erfindung kann der Koppler 100 ein Interferenzkoppler sein. In einigen Ausführungsformen der Erfindung kann der Koppler 100 mehr als die in Figur 1 dargestellten zwei Ausgangswellenleiter 121 und 122 aufweisen. In einigen Ausführungsformen kann eine Mehrzahl von Kopplern 100 kaskadiert sein, um eine Mehrzahl von Ausgangswellenleitern bereit zu stellen.Beispielsweise kann die Anzahl der Ausgangswellenleiter zwischen zwei und zehn betragen. Entsprechend sind dann auch die Einrichtungen 400, 800 und 500 mehrfach vorhanden. Für das Verständnis der Erfindung wird jedoch in der folgenden Beschreibung lediglich ein einfacher Koppler 100 mit zwei Ausgangswellenleitern 121 und 122 beschrieben.

Im zweiten Ausgangswellenleiter 122 des Kopplers 100 wird ein vorgebbarer Anteil des optischen Signals aus dem Eingangssignal am Eingang 11 ausgekoppelt. Der Anteil kann etwa 5 % bis etwa 25 % betragen. In einigen Ausführungsformen der Erfindung liegt der Anteil zwischen 10 und 15 %. Das verbleibende Signal verlässt den Koppler 100 über den Ausgang 121.

Das Signal auf der optischen Faser 122 wird dem ersten Eingang 410 eines optischen Empfängers 400 zugeführt. Der optische Empfänger 400 wandelt das optische Eingangssignal am Eingang 410 in ein elektrisches Signal, welches am Ausgang 420 bereitgestellt wird. Das dem optischen Empfänger 400 zugeführte Eingangssignal enthält weiterhin alle im Eingangssignal enthaltenen Kanäle. Zur Auswahl eines vorgebbaren Kanals aus dem Eingangssignal wird bei der in Figur 1 dargestellten Ausführungsform ein Lokaloszillator 700 verwendet. Der Lokaloszillator 700 weist Ausgänge 720 auf, an welchem ein optisches Signal des Lokaloszillators bereitgestellt wird. Der Lokaloszillator 700 kann ein optoelektronisches Halbleiterbauelement enthalten, beispielsweise einen Halbleiterlaser. In diesem Fall stellt der Lokaloszillator 700 ein optisches Signal geringer Bandbreite bereit, welches in etwa dieselbe Wellenlänge aufweist wie der optische Träger des aus dem Eingangssignals zu extrahierenden Kanals. Das optische Signal des Lokaloszillators wird dem optischen Empfänger 400 über einen zweiten Eingang 412 zugeführt.

Im optischen Empfänger 400 führt die Überlagerung aller im Eingangssignal vorhandenen Wellenlängen mit dem Ausgangssignal des Lokaloszillators 700 zu unterschiedlichen Mischprodukten. Dabei ist die Bandbreite des optischen Empfängers 400 so eingestellt, dass alle Mischprodukte bis auf eines außerhalb der Bandbreite des optischen Empfängers liegen. Auf diese Weise wird am Ausgang 420 des optischen Empfängers 400 der gewünschte Nutzdatenstrom des ausgewählten Kanals bereitgestellt.

Der Nutzdatenstrom wird als elektrisches Signal dem Eingang 810 der Signalverarbeitungseinrichtung 800 zugeführt. Die Signalverarbeitungseinrichtung 800 kann eine analoge und/oder eine digitale Schaltung enthalten. Die Signalverarbeitungseinrichtung 800 kann dazu vorgesehen sein, den Datenstrom in vorgebbarer Weise zu manipulieren. In einigen Ausführungsformen kann die Signalverarbeitungseinrichtung 800 eine Regeneration des Signals vornehmen. Die Regeneration kann eine Verbesserung des Timings, eine Verstärkung und/oder eine Pulsformung umfassen. In anderen Ausführungsformen der Erfindung kann die Signalverarbeitungseinrichtung 800 eine Invertierung des Signals vornehmen. In einigen Ausführungsformen kann die Signalverarbeitungseinrichtung 800 eine Formatkonversion des Eingangssignals vornehmen. In einigen Ausführungsformen der Erfindung kann die Signalverarbeitungseinrichtung 800 den Nutzdatenstrom über einen zweiten Ausgang 822 bereitstellen. Der Nutzdatenstrom kann dann das Netzelement 1 über den zweiten Ausgang 14 als optisches oder elektrisches Signal verlassen.

In einigen Ausführungsformen der Erfindung kann die Signalverarbeitungseinrichtung 800 einen neuen Nutzdatenstrom über den zweiten Eingang 812 entgegennehmen. Dieser neue Nutzdatenstrom kann dem Netzelement 1 über den Eingang 13 als optisches oder elektrisches Signal zugeführt werden.

Das von der Signalverarbeitungseinrichtung 800 bearbeitete Nutzsignal verlässt die Signalverarbeitungseinrichtung 800 über den Ausgang 820.

Das Ausgangssignal der Signalverarbeitungseinrichtung 800 wird einem optischen Sender 500 über dessen Eingang 510 zugeführt. Der optische Sender kann ein optoelektronisches Halbleiterbauelement enthalten, welches in an sich bekannter Weise ein optisches, moduliertes Trägersignal erzeugt. Auf diese Weise wird am Ausgang 520 des optischen Senders 500 ein Signal bereitgestellt, welches zumindest die Information des Datenstromes enthält, welcher am Ausgang 820 der Signalverarbeitungseinrichtung 800 bereitgestellt wurde.

In einigen Ausführungsformen der Erfindung kann der optische Sender 500 einen Modulator enthalten, welcher ein optisches Trägersignal moduliert, welches vom Lokaloszillator 700 bereitgestellt und dem optischen Sender über dessen Eingang 512 zugeführt wird. Auf diese Weise kann die Trägerfrequenz des am Ausgang 520 bereitgestellten Signals mit großer Genauigkeit kontrolliert werden.

Das am Ausgang 520 des optischen Senders 500 bereitgestellte optische Datensignal wird über einen Eingang 212 einem zweiten optischen Koppler 200 zugeführt. Der optische Koppler 200 kann wie der erste Koppler 100 ein Schmelzkoppler oder ein Interferenzkoppler sein. Dem Koppler 200 wird weiterhin über einen ersten Eingang 211 das Eingangssignal zugeführt, welches den ersten Koppler 100 über den Ausgang 121 verlassen hat.

Im zweiten Koppler 200 interferiert das Eingangssignal mit dem am Ausgang 520 bereitgestellten Signal. Um die Phasendifferenz der beiden für die Interferenz vorgesehenen Signale auf einen vorgebbaren Wert einstellen zu können, kann in einigen Ausführungsformen der Erfindung ein Verzögerungselement 600 mit einem Eingang 610 und einem Ausgang 620 vorgesehen sein. Das Verzögerungselement 600 kann in einigen Ausführungsformen der Erfindung ein Lichtwellenleiter einer vorgebbaren Länge sein, wobei die Verzögerung der Laufzeit des Signals auf diesem Lichtwellenleiter entspricht.

Das am Ausgang 820 der Signalverarbeitungseinrichtung 800 bereitgestellte Signal kann in einigen Ausführungsformen der Erfindung so gebildet sein, dass dieses einen Signalanteil enthält, welcher das ursprünglich auf diesem Kanal transportierte Signal bei der Interferenz im zweiten Koppler 200 auslöscht. Auf diese Weise repräsentiert der betreffende Kanal am Ausgang 220 des zweiten Kopplers 200 das über den Eingang 13 zugeführte Datensignal und/oder das in der Signalverarbeitungseinrichtung 800 regenerierte bzw. veränderte Datensignal. Das aus dem zweiten Koppler 200 austretende optische Signal verlässt das Netzelement 1 über dessen Ausgang 12. Der Ausgang 12 kann wiederum einen optischen Freistrahl oder einen Lichtwellenleiter umfassen.

In einigen Ausführungsformen der Erfindung kann die das Netzelement 1 als optoelektronisches Halbleiterbauelement auf einem einzigen Substrat monolithisch integriert sein. In anderen Ausführungsformen der Erfindung kann das Netzelement 1 teilintegriert ausgeführt sein. In diesem Fall sind lediglich einige der in Figur 1 dargestellten Elemente des Netzelementes 1 monolithisch auf einem Substrat integriert. Andere Elemente können dann auf einem oder mehreren weiteren Substraten bereitgestellt werden. Eine Mehrzahl von Halbleitersubstraten kann in einem einzigen Gehäuse zusammengefasst sein. In einigen Ausführungsformen der Erfindung können die einzelnen Komponenten des Netzelementes 1 in unterschiedlichen Gehäusen angeordnet sein, welche auf einem Schaltungsträger, beispielsweise einer gedruckten Leiterplatte, zusammengefügt sind.

Die Signalverarbeitungseinrichtung 800 kann in einigen Ausführungsformen der Erfindung eine programmierbare Logikschaltung oder einen anwendungsspezifischen Halbleiterchip enthalten. In einigen Ausführungsformen der Erfindung kann die Signalverarbeitungseinrichtung 800 einen Mikroprozessor oder einen Mikrocontroller enthalten, auf welchem eine Software ausgeführt wird, so dass die Signalverarbeitungseinrichtung 800 die ihr zugedachte Funktion ausführt.

Figur 2 zeigt eine Ausführungsform eines erfindungsgemäßen Netzelementes 1, anhand derer der Aufbau des optischen Empfängers 400, der Signalverarbeitungseinrichtung 800 und der Aufbau des optischen Senders 500 näher erläutert wird.

Die Ausführungsform der Erfindung gemäß Figur 2 enthält erste und zweite Koppler 100 und 200 sowie ein Verzögerungselement 600, wie in Zusammenhang mit Figur 1 erläutert. Weiterhin enthält auch das Netzelement gemäß Figur 2 einen Lokaloszillator 700, welcher ein optisches Signal einer vorgebbaren Wellenlänge bereitstellt.

Der optische Empfänger 400 gemäß Figur 2 enthält einen dritten Koppler 300 mit einem ersten Eingang 311, einem zweiten Eingang 312, einem ersten Ausgang 321 und einem zweiten Ausgang 322. Der dritte Koppler 300 kann in einigen Ausführungsformen ein 2x2-Multimode-Interferenzkoppler sein. In diesem Fall wird im dritten Koppler 300 das über den Eingang 410 zugeführte Eingangssignal und das Signal des Lokaloszillators 700 zur Interferenz gebracht. Das Interferenzsignal steht an den beiden Ausgängen 321 und 322 des dritten Kopplers 300 zur Verfügung und wird über die Eingänge 441 einem Differenzsignaldetektor 440 zugeführt.

In einigen Ausführungsformen der Erfindung kann vorgesehen sein, dass im Signalpfad zwischen dem Eingang 410 des optischen Empfängers 400 und dem ersten Eingang 311 des dritten Kopplers 300 sowie im Signalpfad zwischen dem zweiten Eingang 412 des optischen Empfängers 400 und dem zweiten Eingang 312 des dritten Kopplers 300 eine Einrichtung 470 zur Polarisationsregelung angeordnet ist. Auf diese Weise kann die Polarisation der dem dritten Koppler 300 zugeführten Signale nachgeführt werden, so dass diese stets den gleichen Wert aufweist bzw. der tatsächliche Wert der Polarisation nur um eine vorgebbare Differenz von einem Sollwert abweicht. Auf diese Weise wird eine zuverlässige Überlagerung der Signale im dritten Koppler 300 sichergestellt, so dass der dritte Koppler 300 ein optisches Signal hoher Güte an den Eingang 441 des Differenzsignaldetektors 440 bereitstellen kann.

In anderen Ausführungsformen der Erfindung kann die Einrichtung 470 zur Polarisationsregelung auch durch einen statischen Polarisationsfilter ersetzt sein. In einer solchen Ausführungsform der Erfindung kann vorgesehen sein, den optischen Empfänger 400 zweifach auszuführen, so dass für jede Polarisationsrichtung ein zugeordneter optischer Empfänger 400 zur Verfügung steht. Der Differenzsignaldetektor 440 stellt an seinem Ausgang 443 ein elektrisches Signal zur Verfügung, welches eine Funktion der Differenz der Intensitäten der am Eingang 441 anliegenden optischen Signale ist. Der Differenzsignaldetektor 440 kann eine endliche Bandbreite aufweisen, welche so ausgewählt ist, dass alle Mischungsprodukte der Eingangssignale am Eingang 410 mit dem Signal des Lokaloszillators 700 außerhalb dieser Bandbreite liegen, mit Ausnahme eines vorgebbaren Mischungsproduktes, welches aus dem auszuwählenden Kanal des Eingangssignals gebildet ist. Das elektrische Signal des Differenzsignaldetektors 440 verlässt dann den optischen Empfänger 400 und wird der Signalverarbeitungseinrichtung 800 über deren ersten Eingang 810 zugeführt.

Im dargestellten Ausführungsbeispiel weist die Signalverarbeitungseinrichtung 800 eine analoge elektronische Signalverarbeitung auf. Das am Eingang 810 anliegende Signal kann durch einen optionalen Tiefpassfilter 830 gefiltert werden. Der Tiefpaßfilter 830 stellt dabei sicher, dass von der nachfolgenden Signalverarbeitung nur die Nutzsignale des ausgewählten optischen Übertragungskanals erfasst werden. Sofern die Bandbreitenbegrenzung des Differenzsignaldetektors 440 entsprechend gewählt ist, kann der Tiefpassfilter 830 in einigen Ausführungsformen der Erfindung auch entfallen.

In einigen Ausführungsformen der Erfindung kann das aus dem ausgewählten optischen Übertragungskanal extrahierte Datensignal die Signalverarbeitungseinrichtung 800 über den zweiten Ausgang 822 verlassen. Das Signal kann dann am Ausgang 14 des Netzelementes 1 zur Verfügung gestellt werden.

In einigen Ausführungsformen der Erfindung kann das extrahierte Datensignal einem Invertierer 840 zugeführt werden. Auf diese Weise wird am ersten Ausgang 820 der Signalverarbeitungseinrichtung 800 ein invertiertes Datensignal bereitgestellt, welches das den optischen Sender 500 über den Ausgang 520 verlassende optische Signal so moduliert, dass dieses im zweiten Koppler 200 mit dem ursprünglichen optischen Eingangssignal so interferiert, dass der ausgewählte Kanal im Ausgangssignal ausgelöscht oder nur unmoduliert vorhanden ist. Dadurch steht das Trägersignal für einen weiteren Nutzdatenstrom zur Verfügung.

Dieser weitere Nutzdatenstrom kann dem Netzelement 1 über den Eingang 13 zugeführt werden. Der Eingang 13 ist dabei mit dem Eingang 812 der Signalverarbeitungseinrichtung 800 verknüpft, so dass das Datensignal die Signalverarbeitungseinrichtung 800 ebenfalls über deren Ausgang 820 verlassen kann. Das elektrische Signal am Ausgang 820 enthält somit das invertierte ursprüngliche Signal sowie den statt dem ursprünglichen Datensignal aufzumodulierenden Datenstrom. Der über den Anschluss 13 zugeführte Datenstrom kann die identischen Nutzdaten enthalten, welche vorher über den Ausgang 14 zur Verfügung gestellt wurden. Die Nutzdaten können dann zwischen dem Ausgang 14 und dem Eingang 13 einer Regeneration unterzogen werden. In anderen Ausführungsformen der Erfindung kann eine solche Regeneration auch innerhalb der Signalverarbeitungseinrichtung 800 ausgeführt werden. In wiederum einer anderen Ausführungsform der Erfindung kann der aus dem Ausgang 14 abgeführte Datenstrom andere Nutzdaten enthalten als der dem Eingang 13 zugeführte Datenstrom.

Das in der Signalverarbeitungseinrichtung 800 erzeugte elektrische Signal wird dem optischen Sender 500 zugeführt. In der dargestellten Ausführungsform enthält der optische Sender 500 einen Modulator 530. Dem Modulator wird ein optischer Träger aus dem Lokaloszillator 700 zugeführt, welcher mit dem Datenstrom der Signalverarbeitungseinrichtung 800 moduliert wird. Die Modulation kann beispielsweise eine Amplitudenmodulation, eine Phasenmodulation oder eine andere, an sich bekannte Modulation umfassen.

Weiterhin kann der optische Sender zusätzliche Bauelemente enthalten, beispielsweise einen Verstärker 540, welcher eine Impedanzwandlung durchführen und/oder die Stromstärke und/oder die Spannung des elektrischen Signals anpassen kann. In einigen Ausführungsformen der Erfindung kann der Verstärker 540 eine Filterung des Datenstromes durchführen.

In anderen Ausführungsformen der Erfindung kann der optische Sender 500 auch einen anderen Aufbau aufweisen und beispielsweise statt dem Modulator 530 einen direkt modulierbaren Halbleiterlaser enthalten.

Das vom optischen Sender 500 über den Ausgang 520 ausgesandte Signal wird dann im zweiten Koppler 200 mit dem ursprünglichen Signal zur Interferenz gebracht. Dabei löscht das im Invertierer 840 invertierte Datensignal das ursprüngliche Datensignal aus, so dass am Ausgang des zweiten Kopplers 200 der ausgewählte Kanal nur noch die über den Eingang 13 zugeführten Nutzdaten enthält.

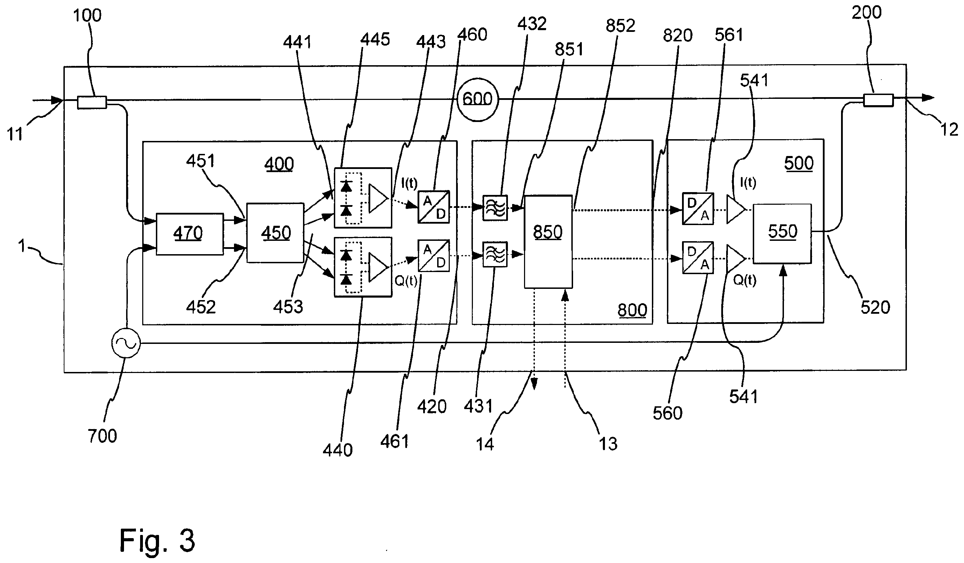

Figur 3 zeigt eine Ausführungsform der Erfindung, welche eine digitale Datenverarbeitung enthält. Auch die Ausführungsform gemäß Figur 3 enthält einen ersten Koppler 100, einen zweiten Koppler 200 und einen Lokaloszillator 700, wie in Zusammenhang mit den Figuren 1 und 2 erläutert. Dem optischen Empfänger 400 wird ein Teil des optischen Eingangssignals zugeführt, welcher über den ersten Koppler 100 ausgekoppelt wurde. Weiterhin wird dem optischen Empfänger 400 ein optisches Signal eines Lokaloszillators 700 zugeführt, wie vorstehend beschrieben. Beide optischen Signale können in einigen Ausführungsformen der Erfindung einer Einrichtung 470 zur Polarisationsregelung zugeführt werden, wie vorstehend in Zusammenhang mit Fig. 2 beschrieben. In anderen Ausführungsformen der Erfindung kann die Einrichtung 470 zur Polarisationsregelung auch entfallen oder durch einen einfachen Polarisationsfilter ersetzt sein.

Nachfolgend gelangen die optischen Signale zu einer Einrichtung 450, mit welcher die Intensität und/oder die Phase des Eingangssignals extrahierbar ist. In einigen Ausführungsformen der Erfindung kann die Einrichtung 450 einen Multimode-Interferenzkoppler enthalten. In einigen Ausführungsformen der Erfindung kann der Multimode-Interferenzkoppler einen 2x4-90°-Hybrid sein oder einen solchen enthalten. In diesem Fall weist die Einrichtung 450 zwei Eingänge 451 und 452 sowie vier Ausgänge 453 auf. Die Ausgänge 453 können paarweise mit zugeordneten Differenzsignaldetektoren 440 und 445 verknüpft sein.

Die Differenzsignaldetektoren 440 und 445 weisen eine endliche Bandbreite auf, so dass diese im Zusammenwirken mit dem Lokaloszillator 700 selektiv das Datensignal eines vorgebbaren Kanals des Eingangssignals extrahieren.

Die in Figur 3 dargestellte Ausführungsform der Erfindung zeigt den allgemeinsten Fall, bei welchem mittels zweier Differenzsignaldetektoren 440 und 445 sowohl die Intensität als auch die Phase des optischen Trägersignals ermittelt wird. Auf diese Weise kann ein optischer Datenstrom decodiert werden, welcher mittels einer Quadraturamplitudenmodulation eine Mehrzahl von Datenbits in einer Symboldauer codiert. Sofern das optische Datensignal nur eine Amplitudenmodulation oder nur eine Phasenmodulation aufweist, kann einer der Differenzsignaldetektoren 440 und 445 in einigen Ausführungsformen der Erfindung auch entfallen.

Am Ausgang 443 der Differenzsignaldetektoren sind A/D-Wandler angeordnet, um aus dem elektrischen Ausgangssignal der Differenzsignaldetektoren 440 und 445 einen digitalen Datenstrom zu generieren. Der digitale Datenstrom verlässt dann den optischen Empfänger 400 über dessen Ausgänge 420 und wird der Signalverarbeitungseinrichtung 800 zugeführt.

Auch wenn am Ausgang der A/D-Wandler 460 und 461 nur jeweils eine einzelne Leitungsverbindung dargestellt ist, kann diese selbstverständlich eine Mehrzahl physischer Leiter umfassen, beispielsweise um eine Mehrzahl digitaler Datenbits parallel zu übertragen und/oder als Masseleitung. Die einzelne in Figur 3 dargestellte Leitung beschreibt somit eine logische Verbindung des optischen Empfängers 400 mit der Signalverarbeitungseinrichtung 800 und nicht eine einzelne physische Leitung.

Wie bereits in Zusammenhang mit Figur 2 erläutert, kann die Signalverarbeitungseinrichtung 800 Tiefpassfilter 431 und 432 aufweisen. In anderen Ausführungsformen der Erfindung können diese Tiefpassfilter auch entfallen oder Bestandteil des optischen Empfängers 400 sein. Ebenso können die A/D-Wandler 460 und 461 in einigen Ausführungsformen auch Bestandteil der Signalverarbeitungseinrichtung 800 und nicht im optischen Empfänger 400 angeordnet sein.

Nachfolgend gelangt das Signal zu einer Logikschaltung 850 mit zumindest einem Eingang 851 und zumindest einem Ausgang 852. Die Logikschaltung 850 kann in einigen Ausführungsformen der Erfindung eine Invertierung des Datensignals durchführen, wie in Zusammenhang mit Figur 2 beschrieben. Auf diese Weise enthält das Ausgangssignal der Signalverarbeitungseinrichtung 800 eine Signalkomponente, welche das ursprünglich auf dem augewählten Kanal transportierte Datensignal durch Interferenz im zweiten Koppler 200 auslöscht.

Weiterhin kann die Logikschaltung 850 weitere Modifikationen des zugeführten Datensignals durchführen. Beispielsweise kann in der Logikschaltung 850 eine Regeneration des Signals erfolgen. In anderen Ausführungsformen der Erfindung kann die Logikschaltung 850 eine Formatkonversion des Signals durchführen. In wiederum einer anderen Ausführungsform der Erfindung kann die Logikschaltung 850 den Datenstrom oder einen Teil davon über den Ausgang 14 des Netzelementes 1 bereitstellen und/oder über den Anschluss 13 des Netzelementes 1 einen Datenstrom entgegennehmen. Die Logikschaltung 850 kann hierzu einen digitalen Signalprozessor, eine programmiere Logikschaltung, einen Mikroprozessor oder einen Mikrocontroller enthalten, welcher die jeweils gewünschten Modifikationen des über den Anschluss 851 zugeführten Datenstromes durchführt.

Der in der Logikschaltung 850 modifizierte Datenstrom verlässt die Logikschaltung über den Ausgang 852. Das über den Ausgang 852 bereitgestellte digitale Datensignal verlässt die Einrichtung 800 über deren Ausgang 820. Das Datensignal enthält einen digitalen Datenstrom, welcher die gewünschte Wellenform repräsentiert, mit welcher der optische Träger in der nachfolgenden optischen Sendeeinrichtung 500 moduliert werden soll.

Zur Modulation des optischen Trägers wird gemäß Figur 3 ein I-Q-Modulator 550 eingesetzt. Dem I-Q-Modulator 550 wird der unmodulierte optische Träger aus dem Lokaloszillator 700 zugeführt. Weiterhin wird dem Modulator 550 zumindest ein elektrisches analoges Signal zugeführt, dessen Wellenform auf den optischen Träger aufmoduliert werden soll. Zur Erzeugung dieses analogen elektrischen Signals steht im optischen Sender 500 zumindest ein D/A-Wandler 560 und 561 zur Verfügung. In anderen Ausführungsformen der Erfindung können die D/A-Wandler auch Bestandteil der Signalverarbeitungseinrichtung 800 sein. Die D/A-Wandler 560 und 561 empfangen den Datenstrom der Einrichtung 800 und stellen an ihren Ausgängen das Eingangssignal für den Modulator 550 zur Verfügung.

In einigen Ausführungsformen der Erfindung kann der optische Sender 500 auch optionale Verstärker 541 enthalten, mittels welchen eine Impedanzanpassung, eine Verstärkung oder eine Filterung der analogen Signale durchgeführt werden kann. Sofern das Ausgangssignal des optischen Senders 500 nur eine einfache Amplituden- oder Phasenmodulation aufweist, kann in einigen Ausführungsformen der Erfindung auch ein einfacher Modulator 550 eingesetzt werden, welcher nur eines der dargestellten analogen Signale empfängt.

Das vom optischen Sender 500 ausgesandte optische Signal wird wiederum im zweiten Koppler 200 zur Interferenz gebracht, wie bereits in Zusammenhang mit Figuren 1 und 2 beschrieben.

Selbstverständlich ist die Erfindung nicht auf die in der Figur und den Ausführungsbeispielen dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Merkmale definieren, so dient diese Bezeichnung der Unterscheidung zweier gleichartiger Merkmale, ohne eine Rangfolge festzulegen.

## Patentansprüche

1. Netzelement (1) mit
• zumindest einem ersten Eingang (11), welchem ein optisches Eingangsignal zuführbar ist,
• zumindest einem ersten Ausgang (12), welcher dazu eingerichtet ist, ein optisches Ausgangssignal auszusenden, wobei
• das Netzelement weiterhin einen ersten Koppler (100) enthält, mit einem Eingang (110) und einem ersten (121) und einem zweiten Ausgang (122), wobei der erste Eingang (11) des Netzelementes (1) mit dem Eingang (110) des ersten Kopplers (100) verknüpft ist, und
• das Netzelement weiterhin einen optischen Empfänger (400) enthält, welcher zumindest einen Eingang (410) und zumindest einen Ausgang (420) aufweist, wobei der zweite Ausgang (122) des ersten Kopplers (100) mit dem Eingang (410) des optischen Empfängers (400) verknüpft ist,
• das Netzelement weiterhin einen optischen Sender (500) enthält, welcher zumindest einen Eingang (510) und zumindest einen Ausgang (520) aufweist,
• das Netzelement weiterhin eine Signalverarbeitungseinrichtung (800) mit zumindest einem ersten Eingang (810) und zumindest einem ersten Ausgang (820) enthält, wobei der Ausgang (420) des optischen Empfängers (400) mit dem Eingang (810) und der Eingang (510) des optischen Senders (500) mit dem Ausgang (820) verknüpft ist,
• das Netzelement weiterhin einen zweiten Koppler (200) enthält, mit einem ersten Eingang (211), einem zweiten Eingang (212) und einem Ausgang (220), wobei der erste Ausgang (12) des Netzelementes (1) mit dem Ausgang (220) des zweiten Kopplers (200) verknüpft ist, der erste Eingang (211) des zweiten Kopplers (200) mit dem ersten Ausgang (121) des ersten Kopplers (100) verknüpft ist, und der zweite Eingang (212) des zweiten Kopplers (200) mit dem Ausgang (520) des optischen Senders (500) verknüpft ist,
**dadurch gekennzeichnet, dass**
• die Signalverarbeitungseinrichtung (800) dazu eingerichtet ist, an ihrem Ausgang (820) ein Signal bereit zu stellen, welches so gebildet ist, dass dieses einen Signalanteil enthält, welcher bei der Interferenz mit dem optischen Eingangssignal im zweiten Koppler (200) einen Kanal im optischen Ausgangssignal löscht.

2. Netzelement nach Anspruch 1, weiterhin enthaltend ein Verzögerungselement (600) mit einem Eingang (610) und einem Ausgang (620), wobei der Eingang (610) mit dem ersten Ausgang (121) des ersten Kopplers (100) verknüpft ist und der Ausgang (620) mit dem ersten Eingang (211) des zweiten Kopplers (200) verknüpft ist.

3. Netzelement nach einem der Ansprüche 1 oder 2, weiterhin enthaltend zumindest einen zweiten Eingang (13), welchem ein zweites Nutzsignal zuführbar ist, und/oder zumindest einen zweiten Ausgang (14), welcher dazu eingerichtet ist, ein erstes Nutzsignal auszusenden, wobei der zweite Eingang (13) des Netzelementes (1) mit einem zweiten Eingang (812) der Signalverarbeitungseinrichtung (800) verknüpft ist und/oder der zweite Ausgang (14) des Netzelementes (1) mit einem zweiten Ausgang (822) der Signalverarbeitungseinrichtung (800) verknüpft ist.

4. Netzelement nach einem der Ansprüche 1 bis 3, weiterhin enthaltend einen Lokaloszillator (700) mit zumindest einem Ausgang (720), wobei der optische Sender (500) und/oder der optische Empfänger (400) jeweils einen zweiten Eingang (512, 412) aufweisen, welcher mit dem Ausgang (720) des Lokaloszillators (700) verknüpft ist.

5. Netzelement nach einem der Ansprüche 1 bis 4, **dadurch gekennzeichnet, dass** der erste Koppler (100) dazu eingerichtet ist, etwa 5 % bis etwa 25 % der optischen Leistung des Eingangs (110) am zweiten Ausgang (122) bereit zu stellen.

6. Netzelement nach einem der Ansprüche 1 bis 5, **dadurch gekennzeichnet, dass** der optische Empfänger (400) eine Einrichtung (450) enthält, mit welcher die Intensität und/oder die Phase eines Signals extrahierbar ist, welche zumindest einen ersten Eingang (451) und einen zweiten Eingang (452) und zumindest einen Ausgang (453) enthält, wobei der erste Eingang (451) mit dem Eingang (410) des optischen Empfängers (400) verknüpft ist und der zweite Eingang (452) mit dem zweiten Eingang (412) des optischen Empfängers (400) verknüpft ist und
der optische Empfänger (400) weiterhin zumindest einen Differenzsignaldetektor (440, 445) enthält, welcher zumindest einen Eingang (441) und zumindest einen Ausgang (443) enthält, wobei der Ausgang (443) des Differenzsignaldetektors (440, 445) mit dem Ausgang (420) des optischen Empfängers (400) verknüpft ist, und wobei zumindest ein optionaler A/D-Wandler (460, 461) im Signalpfad zwischen dem Ausgang (420) des optischen Empfängers (400) und dem Ausgang (443) des Differenzsignaldetektors (440, 445) angeordnet sein kann.

7. Netzelement nach einem der Ansprüche 1 bis 6, **dadurch gekennzeichnet, dass** der optische Sender (500) einen Amplitudenmodulator (530) und/oder zumindest einen Verstärker (540, 541, 542) und/oder zumindest einen D/A-Wandler (560, 562) und/oder zumindest einen I-Q-Modulator (550) enthält.

8. Netzelement nach einem der Ansprüche 1 bis 7, **dadurch gekennzeichnet, dass** die Signalverarbeitungseinrichtung (800) zumindest einen Tiefpassfilter (830, 831, 832) und/oder einen Invertierer (840) und/oder eine Logikschaltung (850) enthält.

9. Netzelement nach einem der Ansprüche 1 bis 8, **dadurch gekennzeichnet, dass** die Signalverarbeitungseinrichtung (800) zumindest einen Invertierer (840) mit einem Eingang und einem Ausgang und einen optionalen Tiefpassfilter (830) mit einem Eingang und einem Ausgang enthält,
wobei der Eingang des Invertieres (840) mit dem ersten Eingang (810) und/oder dem zweiten Ausgang (822) der Signalverarbeitungseinrichtung (800) verknüpft ist,
der Ausgang des Invertierers (840) mit dem Ausgang (820) der Signalverarbeitungseinrichtung (800) und/oder mit dem zweiten Eingang (812) der Signalverarbeitungseinrichtung (800) verknüpft ist und
der optionale Tiefpassfilter (830) im Signalpfad zwischen dem Eingang des Invertieres (840) und dem ersten Eingang (810) der Signalverarbeitungseinrichtung (800) angeordnet ist.

10. Netzelement nach einem der Ansprüche 1 bis 9, **dadurch gekennzeichnet, dass** die Signalverarbeitungseinrichtung (800) zumindest eine Logikschaltung (850) mit zumindest einem Eingang (851) und zumindest einem Ausgang (852) enthält,
wobei der Eingang (851) der Logikschaltung (850) mit dem ersten Eingang (810) der Signalverarbeitungseinrichtung (800) verknüpft ist,
der Ausgang (852) der Logikschaltung (850) mit dem ersten Ausgang (820) der Signalverarbeitungseinrichtung (800) verknüpft ist, wobei
zumindest ein optionaler Tiefpassfilter (831, 832) im Signalpfad zwischen dem Eingang (851) der Logikschaltung (850) und dem ersten Eingang (810) der Signalverarbeitungseinrichtung (800) angeordnet sein kann.

11. Netzelement nach einem der Ansprüche 1 bis 10, **dadurch gekennzeichnet, dass** im Signalpfad zwischen dem Eingang (410) des optischen Empfängers (400) und dem ersten Eingang (311) des dritten Kopplers (300) sowie im Signalpfad zwischen dem zweiten Eingang (412) des optischen Empfängers (400) und dem zweiten Eingang (312) des dritten Kopplers (300) eine Einrichtung (470) zur Polarisationsregelung angeordnet ist.

12. Netzelement nach einem der Ansprüche 1 bis 11, **dadurch gekennzeichnet, dass** der erste Koppler (100) und/oder der zweite Koppler (200) und/oder der dritte Koppler (300) einen Multimode-Interferenzkoppler oder einen Schmelzkoppler umfasst.

13. Verfahren zum Modifizieren eines mehrkanaligen optischen Eingangssignals, welches die folgenden Schritte enthält:
- Aufteilen der optischen Leistung des optischen Eingangssignals in einen ersten Teil und einen zweiten Teil;
- wandeln des ersten Teils der optischen Leistung des optischen Eingangssignals in ein elektrisches Signal;
- Zuführen des elektrischen Signals in eine Signalverarbeitungseinrichtung (800); **gekennzeichnet durch**
- Modifizieren des elektrischen Signals in der Signalverarbeitungseinrichtung (800).
- Wandeln des modifizierten elektrischen Signals in ein modifiziertes optisches Signal;
- Zusammenführen des modifizierten optischen Signals und des zweiten Teils der optischen Leistung des optischen Eingangssignals zu einem Ausgangssignal, wobei bei der Interferenz des modifizierten optischen Signals und des zweiten Teils der optischen Leistung des optischen Eingangssignals das ursprünglich auf diesem Kanal transportierte Signal in dem optischen Ausgangssignal gelöscht wird.

14. Verfahren nach Anspruch 13, **dadurch gekennzeichnet, dass** beim wandeln des ersten Teils der optischen Leistung des optischen Eingangssignals in ein elektrisches Signal eine vorgebbare Wellenlänge aus dem optischen Eingangssignal ausgewählt wird und/oder
dass der erste Teil der optischen Leistung des optischen Eingangssignals etwa 5 % bis etwa 25 % der optischen Leistung des optischen Eingangssignals entspricht.

15. Verfahren nach einem der Ansprüche 13 oder 14, **dadurch gekennzeichnet, dass** der Signalverarbeitungseinrichtung (800) ein zweites Nutzsignal zugeführt wird, und/oder aus der Signalverarbeitungseinrichtung (800) ein erstes Nutzsignal entnommen wird.

## Claims

1. Network element (1) comprising
• at least one first input (11), to which an optical input signal can be supplied,
• at least one first output (12), which is adapted to emit an optical output signal, wherein
• the Network element also contains a first coupler (100), comprising an input (110) and a first output (121) and second output (122), the first input (11) of the Network element (1) being coupled to the input (110) of the first coupler (100), and
• the Network element further contains an optical receiver (400), which has at least one input (410) and at least one output (420), the second output (122) of the first coupler (100) being coupled to the input (410) of the optical receiver (400),
• the Network element further contains an optical transmitter (500), which has at least one input (510) and at least one output (520),
• the Network element further contains a signal processing device (800) having at least one first input (810) and at least one first output (820), the output (420) of the optical receiver (400) being coupled to the input (810) and the input (510) of the optical transmitter (500) being coupled to the output (820),
• the Network element further contains a second coupler (200), having a first input (211), a second input (212) and an output (220), the first output (12) of the network element (1) being coupled to the output (220) of the second coupler (200), the first input (211) of the second coupler (200) being coupled to the first output (121) of the first coupler (100), and the second input (212) of the second coupler (200) being coupled to the output (520) of the optical transmitter (500),
**characterized in that**
• the signal processing device (800) is adapted to provide at the output (820) thereof a signal which is formed in such a way that it contains a signal component which in the case of interference with the optical input signal cancels a channel in the optical output signal in the second coupler (200).

2. Network element according to claim 1, further containing a delay element (600) having an input (610) and an output (620), the input (610) being coupled to the first output (121) of the first coupler (100) and the output (520) being coupled to the first input (211) of the second coupler (200).

3. Network element according to any of claims 1 or 2, further containing at least one second input (13), to which a second useful signal can be supplied, and/or at least one second output (14), which is adapted to emit a first useful signal, the second input (13) of the network element (1) being coupled to a second input (812) of the signal processing device (800) and/or the second output (14) of the network element (1) being coupled to a second output (822) of the signal processing device (800).

4. Network element according to any of claims 1 to 3, further containing a local oscillator (700) having at least one output (720), the optical transmitter (500) and/or the optical receiver (400) each having a second input (512, 412), which is coupled to the output (720) of the local oscillator (700).

5. Network element according to any of claims 1 to 4, **characterized in that** the first coupler (100) is adapted to provide about 5 % to about 25 % of the optical power of the input (110) at the second output (122).

6. Network element according to any of claims 1 to 5, **characterized in that** the optical receiver (400) contains a device (450), by means of which the intensity and/or the phase of a signal can be extracted, which contains at least one first input (451) and one second input (452) and at least one output (453), the first input (451) being coupled to the input (410) of the optical receiver (400) and the second input (452) being coupled to the second input (412) of the optical receiver (400) and
the optical receiver (400) further contains at least one differential signal detector (400, 445), which contains at least one input (441) and at least one output (443), the output (443) of the differential signal detector (440, 445) being coupled to the output (420) of the optical receiver (400) and wherein at least one optional A/D converter (460, 461) can be arranged in the signal path between the output (420) of the optical receiver (400) and the output (443) of the differential signal detector (440, 445).

7. Network element according to any of claims 1 to 6, **characterized in that** the optical transmitter (500) contains an amplitude modulator (530) and/or at least one amplifier (540, 541, 542) and/or at least one D/A converter (560, 562) and/or at least one I-Q modulator (550).

8. Network element according to any of claims 1 to 7, **characterized in that** the signal processing device (800) contains at least one low-pass filter (830, 831, 832) and/or an inverter (840) and/or a logic circuit (850).

9. Network element according to any of claims 1 to 8, **characterized in that** the signal processing device (800) contains at least one inverter (840) having an input and an output and an optional low-pass filter (830) having an input and an output,
the input of the inverter (840) being coupled to the first input (810) and/or the second output (822) of the signal processing device (800),
the output of the inverter (840) being coupled to the output (820) of the signal processing device (800) and/or to the second input (812) of the signal processing device (800), and
the optional low-pass filter (830) being arranged in the signal path between the input of the inverter (840) and the first input (810) of the signal processing device (800).

10. Network element according to any of claims 1 to 9, **characterized in that** the signal processing device (800) contains at least one logic circuit (850) having at least one input (851) and at least one output (852),
the input (851) of the logic circuit (850) being coupled to the first input (810) of the signal processing device (800),
the output (852) of the logic circuit (850) being coupled to the first output (820) of the signal processing device (800), wherein
at least one optional low-pass filter (831, 832) can be arranged in the signal path between the input (851) of the logic circuit (850) and the first input (810) of the signal processing device (800).

11. Network element according to any of claims 1 to 10, **characterized in that**, for polarization regulation, a device (470) is arranged in the signal path between the input (410) of the optical receiver (400) and the first input (311) of the third coupler (300) and in the signal path between the second input (412) of the optical receiver (400) and the second input (312) of the third coupler (300).

12. Network element according to any of claims 1 to 11, **characterized in that** the first coupler (100) and/or the second coupler (200) and/or the third coupler (300) comprises a multimode interference coupler or a fusion coupler.

13. Method for modifying a multi-channel optical input signal, which contains the following steps:
- dividing the optical power of the optical input signal into a first part and a second part;
- converting the first part of the optical power of the optical input signal into an electric signal;
- supplying the electric signal to a signal processing device (800); **characterized by**
- modifying the electric signal in the signal processing device (800);
- converting the modified electric signal into a modified optical signal;
- combining the modified optical signal and the second part of the optical power of the optical input signal into an output signal, the signal originally transported on this channel being cancelled in the optical output signal in the case of interference of the modified optical signal and of the second part of the optical power of the optical input signal.

14. Method according to claim 13, **characterized in that** a predeterminable wavelength is selected from the optical input signal during the conversion of the first part of the optical power of the optical input signal into an electric signal and/or
that the first part of the optical power of the optical input signal is about 5 % to about 25 % of the optical power of the optical input signal.

15. Method according to any of claims 13 or 14, **characterized in that** a second useful signal is supplied to the signal processing device (800) and/or a first useful signal is taken from the signal processing device (800).

## Revendications

1. Élément de réseau (1) comprenant
- au moins une première entrée (11) à laquelle un signal d'entrée optique peut être amené,
- au moins une première sortie (12), qui est agencé pour émettre un signal de sortie optique, dans lequel
- l'élément de réseau contient en outre un premier coupleur (100), avec une entrée (110) et avec une première sortie (121) et une seconde sortie (122), telles que la première entrée (11) de l'élément de réseau (1) est chaînée avec l'entrée (110) du premier coupleur (100), et
- l'élément de réseau contient en outre un récepteur optique (400), qui comprend au moins une entrée (410) et au moins une sortie (420), telles que la seconde sortie (122) du premier coupleur (100) est chaînée avec l'entrée (410) du récepteur optique (400),
- l'élément de réseau contient en outre un émetteur optique (500), qui comprend au moins une entrée (510) et au moins une sortie (520),
- l'élément de réseau contient en outre un système de traitement de signal (800) avec au moins une première entrée (810) et au moins une première sortie (820), telles que la sortie (420) du récepteur optique (400) est chaînée avec l'entrée (810) et l'entrée (510) de l'émetteur optique (500) est chaînée avec la sortie (820),
- l'élément de réseau contient en outre un second coupleur (200), avec une première entrée (211), une seconde entrée (212) et une sortie (220), telles que la première sortie (12) de l'élément de réseau (1) est chaînée avec la sortie (220) du second coupleur (200), la première entrée (211) du second coupleur (200) est chaînée avec la première sortie (121) du premier coupleur (100), et la seconde entrée (212) du second coupleur (200) est chaînée avec la sortie (520) de l'émetteur optique (500),
**caractérisé en ce que**
- le système de traitement de signal (800) est conçu pour mettre à disposition à sa sortie (820) un signal qui est ainsi formé que celui-ci contient une part de signal qui, lors de l'interférence avec le signal d'entrée optique dans le second coupleur (200), efface un canal dans le signal de sortie optique.

2. Élément de réseau selon la revendication 1, contenant en outre un élément de retard (600) avec une entrée (610) et avec une sortie (620), telles que l'entrée (610) est chaînée avec la première sortie (121) du premier coupleur (100), et que la sortie (620) est chaînée avec la première entrée (211) du second coupleur (200).

3. Élément de réseau selon l'une des revendications 1 ou 2, contenant en outre au moins une seconde entrée (13) à laquelle peut être amené un second signal utile, et/ou au moins une seconde sortie (14), qui est agencée pour émettre un premier signal utile, telles que la seconde entrée (13) de l'élément de réseau (1) est chaînée avec une seconde entrée (812) du système de traitement de signal (800) et/ou que la seconde sortie (14) de l'élément de réseau (1) est chaînée avec une seconde sortie (822) du système de traitement de signal.

4. Élément de réseau selon l'une des revendications 1 à 3, contenant en outre un oscillateur local (700) avec au moins une sortie (720), dans lequel l'émetteur optique (500) et/ou le récepteur optique (400) comprennent respectivement une seconde entrée (512, 412), qui est chaînée avec la sortie (720) de l'oscillateur local (700).

5. Élément de réseau selon l'une des revendications 1 à 4, **caractérisé en ce que** le premier coupleur (100) est agencé pour mettre à disposition à la seconde sortie (122) environ 5 % jusqu'à environ 25 % de la puissance optique de l'entrée (110).

6. Élément de réseau selon l'une des revendications 1 à 5, **caractérisé en ce que** le récepteur optique (400) contient un système (450) avec lequel l'intensité et/ou la phase d'un signal peut être extraite, qui contient au moins une première entrée (451) et une seconde entrée (452) et au moins une sortie (453), telles que la première entrée (451) est chaînée avec l'entrée (410) du récepteur optique (400) et que la seconde entrée (452) est chaînée avec la seconde entrée (412) du récepteur optique (400), et
le récepteur optique (400) contient en outre au moins un détecteur de signal différentiel (440, 445) qui contient au moins une entrée (441) et au moins une sortie (443), telles que la sortie (443) du détecteur de signal différentiel (440, 445) est chaînée avec la sortie (420) du récepteur optique (400), et dans lequel au moins un convertisseur optionnel analogique/numérique (460, 461) est susceptible d'être agencé dans le trajet de signal entre la sortie (420) du récepteur optique (400) et la sortie (443) du détecteur de signal différentiel (440, 445).

7. Élément de réseau selon l'une des revendications 4 à 6, **caractérisé en ce que** l'émetteur optique (500) contient un modulateur d'amplitude (530) et/ou au moins un amplificateur (540, 541, 542) et/ou au moins un convertisseur numérique/analogique (560, 562) et/ou au moins un modulateur I-Q (550).

8. Élément de réseau selon l'une des revendications 1 à 7, **caractérisé en ce que** le système de traitement de signal (800) contient au moins un filtre passe-bas (830, 831, 832) et/ou un inverseur (840) et/ou un circuit logique (850).

9. Élément de réseau selon l'une des revendications 1 à 8, **caractérisé en ce que** le système de traitement de signal (800) contient un inverseur (840) avec une entrée et une sortie, et un filtre passe-bas (830) optionnel avec une entrée et une sortie,
telles que l'entrée de l'inverseur (840) est chaînée avec la première entrée (810) et/ou avec la seconde sortie (822) du système de traitement de signal (800), la sortie de l'inverseur (840) est chaînée avec la sortie (820) du système de traitement de signal (800) et/ou avec la seconde entrée (812) du système de traitement de signal (800), et
le filtre passe-bas (830) optionnel est agencé dans le trajet de signal entre l'entrée de l'inverseur (840) et la première entrée (810) du système de traitement de signal (800).

10. Élément de réseau selon l'une des revendications 1 à 9, **caractérisé en ce que** le système de traitement de signal (800) contient au moins un circuit logique (850) avec au moins une entrée (851) et au moins une sortie (852),
telles que l'entrée (851) du circuit logique (850) est chaînée avec la première entrée (810) du système de traitement de signal (800),
la sortie (852) du circuit logique (850) est chaînée avec la première sortie (820) du système de traitement de signal (800), dans lequel au moins un filtre passe-bas optionnel (831, 832) peut être agencé dans le trajet de signal entre l'entrée (851) du circuit logique (850) et la première entrée (810) du système de traitement de signal (800).

11. Élément de réseau selon l'une des revendications 1 à 10, **caractérisé en ce qu'**un système (470) pour réguler la polarisation est agencé dans le trajet de signal entre l'entrée (410) du récepteur optique (400) et la première entrée (311) du troisième coupleur (300), ainsi que dans le trajet de signal entre la seconde entrée (412) du récepteur optique (400) et la seconde entrée (312) du troisième coupleur (300).

12. Élément de réseau selon l'une des revendications 1 à 11, **caractérisé en ce que** le premier coupleur (100) et/ou le second coupleur (200) et/ou le troisième coupleur (300) inclut un coupleur à interférence multimode ou un coupleur fusionné.

13. Procédé pour modifier un signal d'entrée optique à plusieurs canaux, qui contient les étapes suivantes :
- on subdivise la puissance optique du signal d'entrée optique en une première partie et une seconde partie ;
- on convertit la première partie de la puissance optique du signal d'entrée optique en un signal électrique ;
- on amène le signal électrique dans un système de traitement de signal (800) ;
**caractérisé par** les étapes consistant à :
- modifier le signal électrique dans le système de traitement de signal (800) ;
- convertir le signal électrique modifié en un signal optique modifié ;
- rassembler le signal optique modifié et la seconde partie de la puissance optique du signal d'entrée optique en un signal de sortie, dans lequel, lors de l'interférence du signal optique modifié et de la seconde partie de la puissance optique du signal d'entrée optique, le signal initialement transporté sur ce canal est effacé dans le signal de sortie optique.

14. Procédé selon la revendication 13, **caractérisé en ce que** lors de la conversion de la première partie de la puissance optique du signal d'entrée optique en un signal électrique, on sélectionne une longueur d'onde prédéterminée parmi le signal d'entrée optique et/ou **en ce que** la première partie de la puissance optique du signal d'entrée optique correspond à environ 5 % à environ 25 % de la puissance optique du signal d'entrée optique.

15. Procédé selon l'une des revendications 13 ou 14, **caractérisé en ce qu'**on amène au système de traitement de signal (800) un second signal utile, et/ou **en ce que** l'on prélève un premier signal utile hors du système de traitement de signal (800).
